# EUROPEAN PATENT APPLICATION

(11) **EP 4 105 191 A1**
(43) Date of publication of application: **21.12.2022**
(21) Application number: 22178667.6
(22) Date of filing: 13.06.2022
(51) Int. Cl.: C05F 9/00, C05F 17/50, C05F 17/60, C05G 3/80

(54) **INTEGRAL SYSTEM FOR PRE-TREATMENT AND ANAEROBIC DIGESTION OF ORGANIC WASTE FROM SEPARATE COLLECTION AND OTHER BIOMASSES WITH A HIGH SOLID CONTENT**

(30) Priority: 15.06.2021 IT 202100015572
(71) Applicant: Calabra Maceri e Servizi S.p.A., 87036 Rende (CS) (IT); Biotech Impianti S.r.l, 87100 Cosenza (IT); Waste To Methane S.r.l., 87036 Rende (CS) (IT)
(72) Inventor: ZANARDI, Giuseppe, I-87036 Rende, COSENZA (IT); BIANCO, Micaela, I-87036 Rende, COSENZA (IT); LE PERA, Adolfo, I-87036 Rende, COSENZA (IT); SELLARO, Miriam, I-87036 Rende, COSENZA (IT)
(74) Representative: Croce, Valeria

(57) **Abstract**

The present Patent Application describes an anaerobic digestion process of the organic fraction of municipal solid waste.

## Description

The present invention applies to the field of waste management, and in particular, of organic waste obtained from separate collection.

### Background art

The anaerobic digestion of organic waste is an established industrial technology which allows material and energy to be recovered and is increasingly implemented to manage household organic waste (waste from food preparation and consumption).

It is a biological process carried out in the absence of oxygen, which results in the microbial degradation of the biodegradable organic substance with the production of a gas, the so-called biogas, essentially consisting of methane (in percentages generally comprised between 50 and 80% by volume) and carbon dioxide, employed for producing (electrical or thermal) energy or, following purification, bio-methane for motor propulsion or for transfer to distribution networks. Anaerobic digestion also generates an important flow of biomass (called "digestate") resulting from the biological process, which digestate can be used in agriculture as a soil improver as is or after possible aerobic maturation.

Over the years, studies and applications of anaerobic digestion on various types of biomasses have led to the broadening of the technological offer. A first distinction is between:
1. solid phase systems, in which the substrate, conventionally consisting of solid household organic waste mixed with coarsely ground plant residues, is subjected to gentle mechanical pre-treatments (the sole opening of the plastic bags used for collection and mixing with plant residues) so as to partially conserve the physical-mechanical integrity thereof; such a waste is placed in closed anaerobic fermentation structures usually by means of rubberized blades and then continuously sprayed with the aqueous suspension spontaneously released by the substrate following the microbial decomposition. Disadvantageously, these systems are characterized by low specific productions of methane due to difficulties in microbial attack to the coarse particles of the substrate; furthermore, they require increased quantities of recirculation of the already digested material to be mixed with the fresh material to provide sufficient inoculum and for this reason, they require high soil consumption; finally, they are difficult to mechanize, requiring the movement with rubberized loading shovels;
2. fluid or liquid phase systems, in which the substrate consists of liquid material or material which is made such by means of preliminary hard grinding with the possible addition of water so as to make it fluid and manipulable by means of pumps and other hydraulic equipment. A further distinction in this category is based on the dry substance content of the pre-treated substrate fed to the fermenter. The following stands out:
   2.1. *wet* digestion when the substrate entering the fermenter has a dry substance content below 10%;
   2.2. *dry* digestion when the substrate has a dry substance content greater than 20%;
   2.3. processes with intermediate dry substance values generally are defined as *semi-dry.*

Growth of the dry systems has been noted over the last few decades, in particular in the processes applied to the organic fraction of municipal waste *(Frazione Organica dei Rifiuti Urbani,* FORSU), in which the solid waste content fed to the digester generally is in the range of 25-35%. With this approach, in which the organic waste starts the anaerobic digestion with the original moisture thereof, without the addition of water, significant advantages are obtained:
- significant decrease in the volumes required for the treatment, with subsequent lower plant costs;
- short hydraulic retention times (15-22 days);
- the amount of biomass to be heated to the process temperatures is smaller, and therefore there is a considerable energy saving for the heating thereof;
- smaller amount of "digestate" to be disposed of (particularly relevant in the case of anaerobic digestion of waste biomasses which accordingly generate a digestate which is itself classified as waste).

In the face of the above-mentioned advantages, the "dry" approach presents new and demanding challenges for designers. Indeed, due to the increased density and viscosity of the flows treated, the *dry* treatment reactors cannot be of the completely mixed type (*continuous stirred tank reactor* - CSTR), rather the type with the partial or total "piston" flow (plug-flow reactors - PFR) is to be implemented. The PFR may be idealized as a (cylindrical or parallelepiped) volume with a material inlet side (ideal piston push side) and an opposite outlet side. The reactor axis may be vertical, and then the substrate will flow from the top downwards (or vice versa), or horizontal, and then the substrate will flow from right to left (or vice versa).

The fact of operating with very dense flows greatly reduces - but does not eliminate - the risk of the division of distinct phases in the reactor (solids which are separated from the liquids), as may instead occur in the *wet* and *semi-dry* processes, and furthermore, makes the rising to the surface of the biogas bubbles forming within the biomass problematic.

For these reasons, there is a need to provide systems which promote the internal movement of the substrate without inducing excessive stirring.

The main technologies on the market and the processes implemented for this type of waste essentially differ from one another in the internal movement technique implemented. The solution described in Patent Application EP0476217A1 with horizontal axis reactor and movement members consisting of slow rotating blades is the one which, with certain variants, is more frequently adopted in the most recent industrial implementation. In it the reactor consists of a metal cylinder or a reinforced concrete parallelepiped with a horizontal axis, and the partial and slow stirring of the substrate is obtained by means of a single horizontal shaft with axis longitudinally aligned with respect to the reactor volume. The shaft carries several radial arms which, due to the effect of the rotation, cause the stirring, the slow destratification and degassing of the substrate while it advances inside the fermentation chamber as a result of the introduction of new substrate on the loading side and the simultaneous removal from the unloading side.

Another solution described in German Application DE3239304-A1 implements - instead of the single shaft with longitudinal axis - a series of shafts having transverse axis with respect to the length of the digester, each of which carrying radially arranged arms. The effect is similar to the one seen above and consists of the slow movement and destratification of the substrate and the degassing thereof.

In both technologies described, the pre-treatment of the substrate biomasses plays a fundamental role because it carries out the following two main functions:
- separation and rejection of non-fermentable materials present in the waste, such as plastics, metals, fabrics and glass;
- decrease of the dimensions of the particles of which the pre-treated waste (ingestate) is composed to promote the microbial attack and speed up fermentation.

The pre-treatment conventionally is performed by using three machines in series: 1) a shredder consisting of a metal tank open at the top on which bottom there is placed a cylindrical member (rotor) provided with metal teeth which turning against a fixed comb, lacerate the plastic bags and break up the material, thus allowing the same to pass below the tank only if reduced to dimensions which are less than the distance between rotor and fixed comb; 2) a sieve or dimensional separator generally consisting of a rotating metal cylinder which walls are provided with holes having diameter between 50 and 80 mm, or of a rotating disc or star sieve with opening having similar dimensions, which allow the organic material to pass while retaining most of the plastic bags and other coarse materials (fabrics, cans, pieces of wood) having larger dimensions at the holes and which are thus sent for disposal or different treatments than anaerobic digestion; 3) a system for accumulating and dosing the sifted organic material.

Since the organic waste disposal and processing are usually carried out during regular work shifts on working days, while anaerobic digestion is a biological process which requires a constant and continuous feeding 24 hours a day, 7 days a week, there is a need to provide an accumulation of the organic material to be fed to the digesters.

This is commonly obtained by means of tanks called bunkers having such a volume as to contain the substrate for at least one and a half working days (end of week), provided with movable metal plate bottom, which slowly slide towards the unloading side, thus supplying a belt or an Archimedes screw which carries the material to the anaerobic digesters.

In order to feed the digesters, the solid material is to be carried to a higher height than the one of the level of the substrate in the digesters, and from such a height is to be introduced therein by means of an auger tilting downwards which introduces the material below the filling level; by doing this, the introduction auger serves as hydraulic guard and thus the backflow of the substrate and the biogas exiting from the feed line are avoided. Alternative to the bunker, certain solutions provide the organic waste to be accumulated prior to the pre-treatment in unloading pits from which an automated feed system feeds the treatment line, by means of an overhead crane provided with a polyp bucket, at night and during the weekend in the absence of personnel.

The passage from the shredder to the sieve and from the sieve to the digester is carried out by using augers or rubber or plate conveyor belts.

The above-described assembly of machines and anaerobic digesters [shredder, sieve, bunker (or automated unloading pits), PFR fermenter] is the prevailing solution in the most recent FORSU industrial treatment applications. However, such an assembly is affected by certain problems which the present invention solves, and which may be summarized as follows:
- the sifting at 50-80 mm allows the passage into the organic fraction (the sub-sieve) of fragments of plastic, glass, metals, fabrics, mussel shells, cork and plastic corks, coffee pods, and other materials which are not anaerobically digestable, or they are in much longer times than those provided in the process (20-22 days) and which therefore determine a decrease in the value of the biogas production;
- the fragments having greater specific weight and greater dimensions not eliminated by the sifting may settle - under certain conditions of substrate viscosity - on the bottom of the digesters, thus inducing breakdowns due to jamming of the movement members and the solenoid valves and digestate unloading pumps. These sediments induce plant stops which are highly damaging in terms of loss of production and the need for lengthy and laborious maintenance interventions;

- in order to decrease the risk of such sediments, it is common to implement the tactic of mixing a significant amount of plant material (ground pruning elements) with the organic fraction, up to and in excess of 15%, which by thickening the substrate, keeps the increased density, up to the outlet from the fermenters. Obviously, given that it is not highly fermentable, this material decreases the average biogas production of the mixture;
- the plastic fragments having smaller specific weight (bags, bottles, glasses, etcetera) may trap biogas bubbles and be dragged to the surface in the digesters, thus inducing the formation of a layer which prevents the biogas from being freed into the head space from which the biogas is usually evacuated and collected. This induces smaller biogas productions and increases in the substrate level in the digesters beyond the safety levels;
- the fragments of plastic and other undesired materials which are contained in the substrate outlet from the fermenters (digestate) are contaminates for the agricultural use of the digestate as an organic fertilizer. The presence thereof results in the need to subject the solid digestate to complex selection and refining operations;
- the average dimensions of the organic waste particles obtained from the pre-treatment are such as to slow down the degradation processes leading to the formation of biogas (hydrolysis, acidogenesis, etcetera) because the microbial attack occurs at the surface of the particles themselves, and therefore the greater the dimension of the particle, the smaller the volume/mass ratio. Smaller particles have a much greater surface exposed to the microbes per unit of mass;
- the material obtained from the pre-treatment is a heterogeneous solid at room temperature and therefore is difficult to heat to the desired process temperature. Therefore, the heating is obtained in the volume of the digesters, thus determining, on the inlet side, an area with a temperature which is lower than the optimal temperature, with a reduction in the overall biochemical methane potential;
- the dosing systems of the ingestate by means of bunkers, and even more by means of automated pits with an overhead crane, characterized by several moving machines also operate at night and on non-working days in the absence of personnel, with apparent problems related to readiness of intervention in the case of breakdown;
- the dosing systems of the ingestate by means of automated pits are affected by the so-called *First In-First Out* problem, that is the last organic waste unloaded into the pit is the first to be sent for processing, while the oldest material remains in the pit longer, thus causing a release of percolating liquids which are to be pumped by specific systems and sent to the fermenters or for purification, with apparent plant complications, economic burdens.

### Summary of the invention

The authors of the present patent application have surprisingly found that certain conditions may considerably increase the yield of the anaerobic digestion process.

### Object of the invention

The object of the present invention is an anaerobic digestion process.

Particular aspects of the invention relate to preferred conditions for carrying out the digestion process.

The product obtained by virtue of the process described and the use thereof as a soil improver are further objects of the present invention.

### Detailed description of the invention

According to a first object, the present Patent Application describes an anaerobic digestion process of household organic waste and other organic waste.

More specifically, the process of the invention is carried out on the organic fraction of municipal solid waste (FORSU) .

According to an aspect of the invention, such a digestion process is of the "dry" type, which is carried out on a mass having a solid content in the range of 25-35% (weight/weight) .

More specifically, the process of the invention does not comprise a step of addition of external water.

As is known, an anaerobic digestion process has several steps, which in particular comprise a first hydrolysis step, during which there is the intervention of hydrolytic bacteria.

This stage allows passing from macromolecules, such as proteins, fats and carbohydrates, to simple molecules, such as amino acids, fatty acids and monosaccharides. Then there is a step of acidification, followed by the step of acetogenesis and lastly, of methane production (methanogenesis) .

According to an aspect of the present invention, the anaerobic digestion process is carried out under mesophile conditions.

The term "mesophile" means conditions providing temperatures of about 20-40°C, and preferably of about 38-40°C.

As a whole, under such conditions the digestion process has a duration of about 20-35 days.

According to another aspect of the present invention, the anaerobic digestion process is carried out under thermophile conditions.

The term "thermophile" means conditions providing temperatures >50°C, and preferably of about 55°C.

As a whole, under such conditions the digestion process has a duration of about 14-20 days.

According to a particular embodiment of the present invention, the step of anaerobic digestion is carried out within a preferred temperature range of between about 40-45°C.

As a whole, under such conditions the digestion process has a duration of about 21 days.

According to a particular aspect of the present invention, the initial mass subjected to the anaerobic digestion process described above is represented by a homogeneous mass of fine particles of organic material, to which reference is made by the expression "puree".

Such a puree appears as a viscous and perfectly amalgamated mud with dry substance in an amount ≥25%, measured in the absence of cuttings.

The presence itself of cuttings, consisting of vegetable material such as leaves and branches, paper and cardboard, is less than about 15% by weight.

According to an aspect of the invention, such a puree comprises particles with dimensions which are not greater than 40 mm, preferably not greater than 30 mm.

According to a preferred aspect, such a puree contains an amount of less than 5% (weight/weight) of such inert, non-digestible materials.

According to a preferred aspect, such a puree contains an amount of less than 3% (weight/weight) of such inert, non-digestible materials, and even more preferably an amount of less than 1% (weight/weight).

Such inert materials are represented by non-organic material, such as several types of plastics, glass, metals, and by organic material with anaerobic digestion times greater than 30 days, such as for example bioplastics.

For the purposes of the present invention, the initial puree is obtained by means of a pre-treatment process of organic waste intended for the successive anaerobic digestion, comprising a first step configured to open organic waste packages and grind the organic waste into particles, and a second step of separation into sub-particles of a moist putrescible organic component (puree) and into sub-particles of a component of non-putrescible waste material.

As described, the puree obtained from the pre-treatment step is subjected to the anaerobic digestion process of the present invention.

The end product obtained with the anaerobic digestion process of the invention, commonly called "digestate", represents a further object of the present Patent Application.

Such a product may be applied as an agricultural soil improver and, as such, represents a further object of the present invention.

The advantages associated with the process described will be apparent to the person skilled in the art from the above description of the invention.

Firstly, when the process is carried out in the narrower temperature range of about 40-45°C, a particular bacterial population is developed, which differs in terms of quality and quantity from the one encountered in the mesophile and thermophile processes.

Such a bacterial community characterizes the efficiency of the process because it changes the kinetics thereof.

From the viewpoint of managing a similar process, it is apparent that at an operating temperature between 40 °C and 45 °C, the management costs associated with heating the reactors are considerably lower with respect to the reactor operating at thermophile load, where the temperatures generally are about 55°C.

The change in temperature in any case is not at the expense of the residence time in the reactor, which in any case remains at about 21 days.

This makes this specific inventive aspect completely compatible with the processes usually carried out, without increasing the operating costs thereof.

By implementing an efficient exchange and thermal insulation system, in this temperature range, the heating costs of the digesters are then almost negligible with respect to the operating costs of the whole plant.

Moreover, an increased stability of the system can also be observed which, if subjected to inhibiting phenomena, is disturbed, but returns to regular operating condition in a brief period of time.

When the two inventive aspects the object of the present Patent Application - represented by the step of pre-treatment and of anaerobic digestion, possibly in the specific temperature range - are simultaneously implemented, the biogas yield of the process is further improved.

The particular mass ("puree") subjected to the process of the present invention then has a homogeneous physical composition, which generally allows improved efficiency, and therefore yield, of the anaerobic process.

Indeed, the average dimensions of the organic waste particles obtained from the pre-treatment are such as to accelerate the degradation processes which result in the formation of biogas (hydrolysis, acidogenesis, etcetera) because the temperature within the puree mass is more uniform and the microbial attack is carried out on a broader surface of the particles themselves exposed to the action of the microbes.

## Claims

1. A process of anaerobic digestion of household organic waste and other "dry" organic waste, which is carried out on a mass having a solid content in the range of 25-35% (weight/weight).

2. The process according to the preceding claim, which is carried out on a mass comprising particles with dimensions not greater than 40 mm, preferably not greater than 30 mm.

3. The process according to claim 1 or 2, comprising the steps of:
- hydrolysis,
- acidification,
- acetogenesis, and
- production of methane (methanogenesis),
wherein said steps are conducted at a temperature of about 20-40°C, and preferably of about 38-40°C.

4. The process according to the preceding claim, wherein said digestion process has a duration of about 20-35 days.

5. The process according to claim 1 or 2, comprising the steps of:
- hydrolysis
- acidification
- acetogenesis
- production of methane (methanogenesis)
wherein said steps are carried out at a temperature >50°C, and preferably of about 55°C.

6. The process according to the preceding claim, wherein said digestion process has a duration of about 14-20 days.

7. The process according to claim 1 or 2, comprising the steps of:
- hydrolysis,
- acidification,
- acetogenesis, and
- production of methane (methanogenesis),
wherein said steps are conducted at a temperature of about 40-45°C.

8. The process according to the preceding claim, wherein said digestion process has a duration of about 21 days.

9. A product obtained by the process according to any one of the preceding claims.

10. Use of a product according to the preceding claim, as an agricultural soil improver.
